# EUROPEAN PATENT APPLICATION

(11) **EP 4 389 706 A1**
(43) Date of publication of application: **26.06.2024**
(21) Application number: 23215131.6
(22) Date of filing: 08.12.2023
(51) Int. Cl.: C01F 17/32, C01G 49/00, C01G 51/00, H01M 4/52, H01M 4/48, H01M 4/58

(54) **ELECTRODE ACTIVE MATERIAL FOR FLUORIDE ION BATTERY, ELECTRODE FOR FLUORIDE ION BATTERY, AND FLUORIDE ION BATTERY**

(30) Priority: 23.12.2022 JP 2022207157; 19.09.2023 JP 2023150965
(71) Applicant: Nichia Corporation, Anan-shi, Tokushima 774-8601 (JP)
(72) Inventor: Kashihara, Kodai, Anan-shi, Tokushima, 774-8601 (JP)
(74) Representative: Vossius & Partner Patentanwälte Rechtsanwälte mbB

(57) **Abstract**

Provided is an electrode active material for a fluoride ion battery. The electrode active material includes a metal composite oxide including: a first metal atom comprising at least one selected from the group consisting of Y, La, Ce, Pr, Nd, Pm, Sm, Eu, Gd, Tb, Dy, Ho, Er, Tm, Yb, Lu, Ca, In, and Sb; a second metal atom comprising at least one selected from the group consisting of Mg, Sr, Ba, and Na; a third metal atom comprising at least one selected from the group consisting of Be, Al, Si, Sc, Ti, V, Cr, Mn, Fe, Co, Ni, Cu, Zn, Ga, Ge, Zr, Nb, Mo, Ru, Rh, Pd, Ag, Sn, Hf, Ta, W, Re, Os, Ir, Pt, and Au; and at least one non-metal atom selected from the group consisting of O, F, N, S, and Cl, the at least one non-metal atom comprising at least an oxygen atom.

## Description

### CROSS-REFERENCE TO RELATED APPLICATIONS

This application claims priority to Japanese Patent Application No. 2022-207157, filed on December 23, 2022, and Japanese Patent Application No. 2023-150965, filed on September 19, 2023, the disclosures of which are hereby incorporated by reference in their entireties.

### TECHNICAL FIELD

The present disclosure relates to an electrode active material for a fluoride ion battery, an electrode for a fluoride ion battery, and a fluoride ion battery.

### BACKGROUND

A lithium ion battery is known as a secondary battery having a high energy density. A fluoride ion battery has been proposed as a battery capable of achieving a higher energy density than that of the lithium ion battery. For example, in Japanese Patent Publication No. 2017143044, an active material is proposed that has a layered perovskite structure and that also has a crystal phase having a specific composition.

### SUMMARY

An object of one embodiment of the present disclosure is to provide an electrode active material for a fluoride ion battery. A first aspect is an electrode active material for a fluoride ion battery, which includes a metal composite oxide including a first metal atom that includes at least one selected from a first metal atom group, a second metal atom that includes at least one selected from a second metal atom group, a third metal atom that includes at least one selected from a third metal atom group, and at least one non-metal atom selected from a non-metal atom group and including at least an oxygen atom. The metal composite oxide has a composition in which the ratio of the total number of moles of the second metal atom to the total number of moles of the first metal atom is 0.8 or greater and 1.2 or smaller" the ratio of the total number of moles of the third metal atom to the total number of moles of the first metal atom is 3.8 or greater and 4.2 or smaller, and the ratio of the total number of moles of the non-metal atom to the total number of moles of the first metal atom is 6.9 or greater and 8.5 or smaller. The first metal atom group consists of Y, La, Ce, Pr, Nd, Pm, Sm, Eu, Gd, Tb, Dy, Ho, Er, Tm, Yb, Lu, Ca, In, and Sb. The second metal atom group consists of Mg, Sr, Ba, and Na. The third metal atom group consists of Be, Al, Si, Sc, Ti, V, Cr, Mn, Fe, Co, Ni, Cu, Zn, Ga, Ge, Zr, Nb, Mo, Ru, Rh, Pd, Ag, Sn, Hf, Ta, W, Re, Os, Ir, Pt, and Au. The specific non-metal atom group consists of O, F, N, S, and Cl.

A second aspect is an electrode active material for a fluoride ion battery, which includes a metal composite oxide having a composition that is represented by Formula (1) as below.

M¹M²ₚM³_{q}Xᵣ (1)

In Formula (1), p, q, and r satisfy 0.8 ≤ p ≤ 1.2, 3.8 ≤ q ≤ 4.2, and 6.9 ≤ r ≤ 8.5. M¹ includes at least one selected from the group consisting of Y, La, Ce, Pr, Nd, Pm, Sm, Eu, Gd, Tb, Dy, Ho, Er, Tm, Yb, Lu, Ca, In, and Sb. M² includes at least one selected from the group consisting of Mg, Sr, Ba, and Na. M³ includes at least one selected from the group consisting of Be, Al, Si, Sc, Ti, V, Cr, Mn, Fe, Co, Ni, Cu, Zn, Ga, Ge, Zr, Nb, Mo, Ru, Rh, Pd, Ag, Sn, Hf, Ta, W, Re, Os, Ir, Pt, and Au. X includes O and may further include at least one selected from the group consisting of N, F, S, and Cl.

A third aspect is an electrode for a fluoride ion battery, that includes the electrode active material for a fluoride ion battery of the first aspect or the second aspect. A fourth aspect is a fluoride ion battery that includes either of the electrodes for a fluoride ion battery, of the third aspect, and an electrolyte.

According to one embodiment of the present disclosure, an electrode active material for a fluoride ion battery can be provided.

### BRIEF DESCRIPTION OF THE DRAWINGS

Fig. 1A is a schematic diagram depicting an example of the crystal structure of a Swedenborgite-type oxide;
Fig. 1B is an enlarged schematic diagram depicting an example of the smallest unit of the crystal structure of the Swedenborgite-type oxide;
Fig. 2 is a diagram depicting an example of an XRD spectrum of a metal composite oxide of Example 1; and
Fig. 3 is an example of an XRD spectrum of a metal composite oxide of Example 2.
Fig. 4 is an example of an XRD spectrum of a metal composite oxide of Example 3.
Fig. 5 is an example of an XRD spectrum of a metal composite oxide of Example 4.
Fig. 6 is a diagram depicting an example of the charge-discharge property of a fluoride ion battery including the metal composite oxide of Example 1.
Fig. 7 is a diagram depicting an example of the charge-discharge property of a fluoride ion battery including the metal composite oxide of Example 2.
Fig. 8 is a diagram depicting an example of the charge-discharge property of a fluoride ion battery including the metal composite oxide of Example 3.
Fig. 9 is a diagram depicting an example of the charge-discharge property of a fluoride ion battery including the metal composite oxide of Example 4.

### DETAILED DESCRIPTION

The term "step" used herein encompasses not only a discrete step but also a step that cannot be clearly distinguished from other steps, as long as the intended purpose of the step is achieved. When there are plural substances that correspond to a component of a composition, an indicated amount of the component contained in the composition means, unless otherwise specified, a total amount of the plural substances existing in the composition. Further, as an upper limit and a lower limit of a numerical range described in the present specification, the values exemplified for the numerical range can be arbitrarily selected and combined. The detailed descriptions of embodiments of the present disclosure are provided below. The embodiments below are intended to exemplify an electrode active material for a fluoride ion battery, an electrode for a fluoride ion battery, and a fluoride ion battery to embody the scope of the present invention, however the present invention is not limited to the electrode active material for the fluoride ion battery, the electrode for the fluoride ion battery, and the fluoride ion battery described below.

### Electrode Active Material for Fluoride Ion Battery

An electrode active material for a fluoride ion battery (hereinafter, also referred to simply as "electrode active material") includes a metal composite oxide including, in the composition thereof, a first metal atom that includes at least one selected from a first metal atom group, a second metal atom that includes at least one selected from a second metal atom group, a third metal atom that includes at least one selected from a third metal atom group, and at least one specific non-metal atom that is selected from a specific non-metal atom group and that includes at least an oxygen atom. The metal composite oxide may have composition as below. The ratio of the total number of moles of the second metal atom to the total number of moles of the first metal atom may be 0.8 or greater and 1.2 or smaller, and 0.9 or greater, or 1.1 or smaller. The ratio of the total number of moles of the third metal atom to the total number of moles of the first metal atom may be 3.8 or greater and 4.2 or smaller, and 3.9 or greater, or 4.1 or smaller. The ratio of the total number of moles of the specific non-metal atom to the total number of moles of the first metal atom may be 6.9 or greater and 8.5 or smaller, and 7.0 or greater, or 8.0 or smaller.

The first metal atom group may include yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium Ho), erbium (Er), thulium (Tm), ytterbium (Yb), lutetium (Lu), calcium (Ca), indium (In), and antimony (Sb).

The second metal atom group may include magnesium (Mg), strontium (Sr), barium (Ba), and sodium (Na),

The third metal atom group may include beryllium (Be), aluminum (Al), silicon (Si), scandium (Sc), titanium (Ti), vanadium (V), chromium (Cr), manganese (Mn), iron (Fe), cobalt (Co), nickel (Ni), copper (Cu), zinc (Zn), gallium (Ga), germanium (Ge), zirconium (Zr), niobium (Nb), molybdenum (Mo), ruthenium (Ru), rhodium (Rh), palladium (Pd), silver (Ag), tin (Sn), hafnium (Hf), tantalum (Ta), tungsten (W), rhenium (Re), osmium (Os), iridium (Ir), platinum (Pt), and gold (Au).

The specific non-metal atom group may include an oxygen atom (O), a fluorine atom (F), a nitrogen atom (N), a sulfur atom (S), and a chlorine atom (Cl).

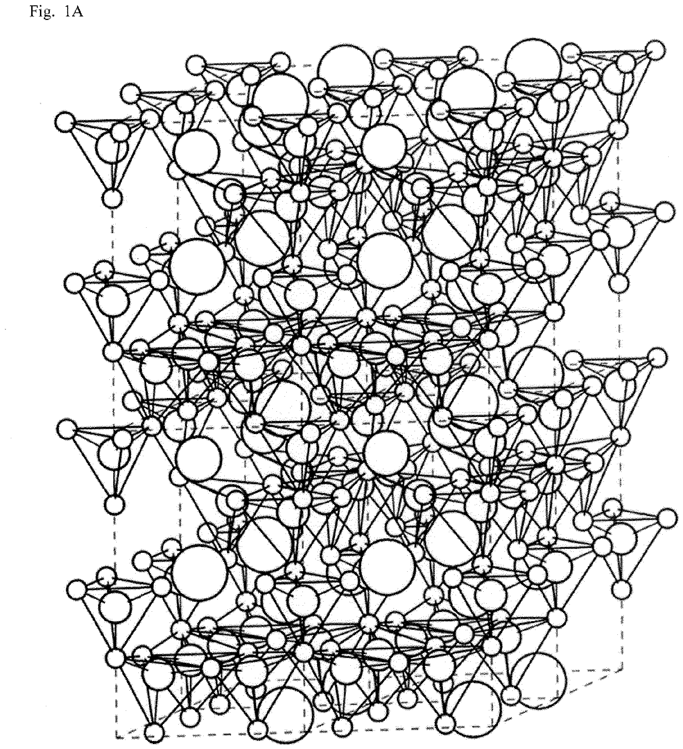

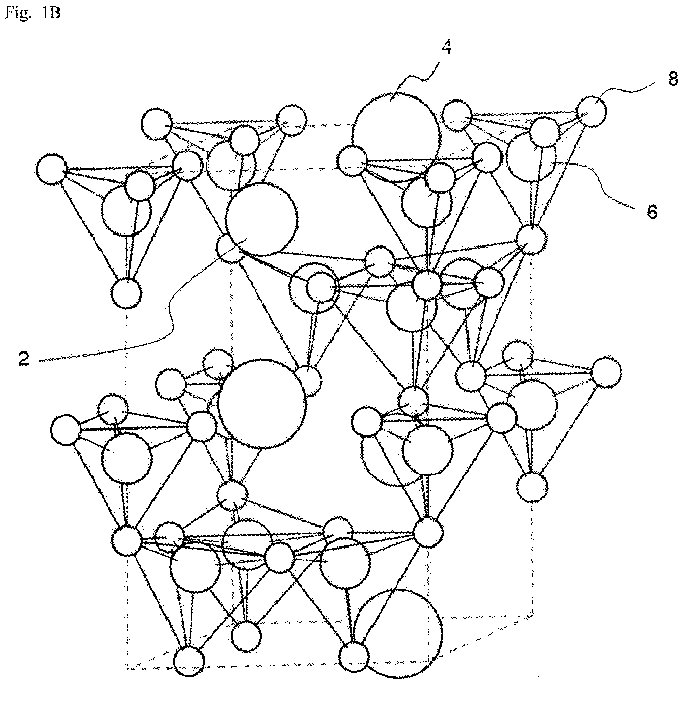

The metal composite oxide included in the electrode active material may be, for example, a Swedenborgite-type oxide. It is considered that, in the Swedenborgite-type oxide, unit cells each including the third metal atoms and oxygen atom that take a tetrahedral structure take a two-dimensional network structure to form a layered crystal structure. Figs. 1A and 1B each depict the crystal structure of YBaCo₄O₇ as an example of the Swedenborgite-type oxide. Fig. 1A is a perspective diagram depicting an outline of the crystal structure, and Fig. 1B is a perspective diagram depicting an outline of the smallest unit of the crystal structure. As depicted in Fig. 1B, tetrahedral-structure unit cells each including cobalt (Co) 6 and oxygen (O) 8 take a two-dimensional network structure, and yttrium (Y) 2 and barium (Ba) 4 take a structure to be surrounded by the tetrahedral-structure unit cells. Many of the conventional electrode active materials for fluoride ion batteries are metal active materials and each function as an active material by a fluorination-defluorination reaction of a metal. The fluorination-defluorination reaction of a metal is a reaction accompanied by a significant change of the crystal structure, and the volume varies significantly. The resistance is therefore high, and the cycle property and the rate property tend to be degraded. On the other hand, a compound having a layered crystal structure develops its function as an active material by insertion and deinsertion of carrier ions into/from the interlayer space. The crystal structure of the active material does not change and the volume therefore varies a little, and reduction of the resistance and improvement of the cycle property, the rate property, and the like can be expected. It is considered for a metal composite oxide that is an oxide having the Swedenborgite-type structure, that these advantages can also be expected. Oxides individually having an oxygen storage capacity are present among the oxides having the Swedenborgite-type structure, and it is considered that these oxides are each a material that tends to take anions into the crystal structure thereof, and it is considered that reversible deinsertion and reversible insertion of fluoride ions are possible.

The first metal atom in the metal composite oxide may include at least one selected from the group consisting of Y, La, Ce, Pr, Nd, Pm, Sm, Eu, Gd, Tb, Dy, Ho, Er, Tm, Yb, Lu, Ca, In, and Sb, may include at least one selected from the group consisting of Sc, Y, Eu, Tb, Dy, Ho, Er, Tm, Ca, and In, and may include at least Y.

The first metal atom in the metal composite oxide may include at least one selected from the group consisting of Y, Eu, Tb, Dy, Ho, Er, Tm, Ca, and In, and may further include at least one selected from the group consisting of La, Ce, Pr, Nd, Pm, Sm, Gd, Yb, Lu, and Sb. In the case where the first metal atom includes at least one selected from the group consisting of Y, Eu, Tb, Dy, Ho, Er, Tm, Ca, and In, the total content of Y, Eu, Tb, Dy, Ho, Er, Tm, Ca, and In may be, for example, 50% by mole or higher, 70% by mole or higher, or 90% by mole or higher. The total content of Y, Eu, Tb, Dy, Ho, Er, Tm, Ca, and In in the first metal atom may be, for example, 100% by mole or lower, or lower than 100%.

The first metal atom further may include Y and may further include at least one selected from the group consisting of La, Ce, Pr, Nd, Pm, Sm, Eu, Gd, Tb, Dy, Ho, Er, Tm, Yb, Lu, Ca, In, and Sb. In the case where the first meal atom includes Y, the content of Y in the first metal atom may be, for example, 50% by mole or higher, 70% by mole or higher, or 90% by mole or higher. The content of Y in the first metal atom may be, for example, 100% by mole or lower, or lower than 100% by mole.

The second metal atom in the metal composite oxide may include at least one selected from the group consisting of Mg, Sr, Ba, and Na, may include at least one selected from the group consisting of Sr and Ba, and may include at least Ba.

The second metal atom in the metal composite oxide may include at least one selected from the group consisting of Sr and Ba, and may further include at least one selected from the group consisting of Mg and Na. In the case where the second metal atom includes at least one selected from the group consisting of Sr and Ba, the total content of Sr and Ba in the second metal atom may be, for example, 50% by mole or higher, 70% by mole or higher, or 90% by mole or higher. The total content of Sr and Ba in the second metal atom may be, for example, 100% by mole or lower, or lower than 100% by mole.

The second metal atom further may include Ba and may further include at least one selected from the group consisting of Mg, Sr, and Na. In the case where the second metal atom includes Ba, the content of Ba in the second metal atom may be, for example, 50% by mole or higher, 70% by mole or higher, or 90% by mole or higher. The content of Ba in the second metal atom may be, for example, 100% by mole or lower, or lower than 100% by mole.

The third metal atom in the metal composite oxide may include at least one selected from the group consisting of Be, Al, Si, Sc, Ti, V, Cr, Mn, Fe, Co, Ni, Cu, Zn, Ga, Ge, Zr, Nb, Mo, Ru, Rh, Pd, Ag, Sn, Hf, Ta, W, Re, Os, Ir, Pt, and Au, may include at least one selected from the group consisting of Al, Si, Fe, Co, and Zn, and may include at least Co.

The third metal atom in the metal composite oxide may include at least one selected from the group consisting of Al, Si, Fe, Co, and Zn, and may further include at least one selected from the group consisting of Be, Sc, Ti, V, Cr, Mn, Ni, Cu, Ga, Ge, Zr, Nb, Mo, Ru, Rh, Pd, Ag, Sn, Hf, Ta, W, Re, Os, Ir, Pt, and Au. In the case where the third metal atom includes at least one selected from the group consisting of Al, Si, Fe, Co, and Zn, the total content of Al, Si, Fe, Co, and Zn in the third metal atom may be, for example, 50% by mole or higher, 70% by mole or higher, or 90% by mole or higher. The total content of Al, Si, Fe, Co, and Zn in the third metal atom may be, for example, 100% by mole or lower, or lower than 100% by mole.

The third metal atom further may include Co, and may further include at least one selected from the group consisting of Be, Al, Si, Sc, Ti, V, Cr, Mn, Fe, Ni, Cu, Zn, Ga, Ge, Zr, Nb, Mo, Ru, Rh, Pd, Ag, Sn, Hf, Ta, W, Re, Os, Ir, Pt, and Au. In the case where the third metal atom includes Co, the content of Co in the third metal atom may be, for example, 50% by mole or higher, 70% by mole or higher, or 90% by mole or higher. The content of Co in the third metal atom may be, for example, 100% by mole or lower, or lower than 100% by mole.

The specific non-metal atom in the metal composite oxide may include at least O, and may further include at least one selected from the group consisting of F, N, S, and Cl. The specific non-metal atom may include only O. In the case where the specific non-metal atom includes O, the content of O in the specific non-metal atom may be, for example, 50% by mole or higher, 70% by mole or higher, or 90% by mole or higher. The content of O in the specific non-metal atom may be, for example, 100% by mole or lower, or lower than 100% by mole.

The metal composite oxide may have composition represented by, for example, Formula (1) as below.

M¹M²ₚM³_{q}Xᵣ (1)

In Formula (1), p, q, and r may satisfy, for example, 0.8≤p≤1.2, 3.8≤q≤4.2, and 6.9≤r≤8.5, and may satisfy 0.9≤p≤1.1, 3.9≤q≤4.1, and 7.0≤r≤8.0,

M¹ may include at least one selected from the group consisting of, for example, Y, La, Ce, Pr, Nd, Pm, Sm, Eu, Gd, Tb, Dy, Ho, Er, Tm, Yb, Lu, Ca, In, Na and Sb. M¹ may include at least one selected from the group consisting of Sc, Y, Eu, Tb, Dy, Ho, Er, Tm, Ca, and In, and may include at least Y.

M¹ may include at least one selected from the group consisting of Y, Eu, Tb, Dy, Ho, Er, Tm, Ca, and In, and may further include at least one selected from the group consisting of La, Ce, Pr, Nd, Pm, Sm, Gd, Yb, Lu, and Sb. In the case where M¹ includes at least one selected from the group consisting of Y, Eu, Tb, Dy, Ho, Er, Tm, Ca, and In, the total content of Y, Eu, Tb, Dy, Ho, Er, Tm, Ca, and In in M¹ may be, for example, 50% by mole or higher, 70% by mole or higher, or 90% by mole or higher. The total content of Y, Eu, Tb, Dy, Ho, Er, Tm, Ca, and In in M¹ may be, for example, 100% by mole or lower, or lower than 100% by mole.

M¹ may include Y and may further include at least one selected from the group consisting of Sc, La, Ce, Pr, Nd, Pm, Sm, Eu, Gd, Tb, Dy, Ho, Er, Tm, Yb, Lu, Ca, In, and Sb. In the case where M¹ includes Y, the content of Y in M¹ may be, for example, 50% by mole or higher, 70% by mole or higher, or 90% by mole or higher. The content of Y in M¹ may be, for example, 100% by mole or lower, or lower than 100% by mole.

M² may include at least one selected from the group consisting of, for example, Mg, Sr, Ba, and Na. M² may include at least one selected from the group consisting of Sr and Ba, and may include at least Ba.

M² may include at least one selected from the group consisting of Sr and Ba, and may further include at least one selected from the group consisting of Mg and Na. In the case where M² includes at least one selected from the group consisting of Sr and Ba, the total content of Sr and Ba in M² may be, for example, 50% by mole or higher, 70% by mole or higher, or 90% by mole or higher. The total content of Sr and Ba in M² may be, for example, 100% by mole or lower, or lower than 100% by mole.

M² may include Ba, may further include at least one selected from the group consisting of Sr and Na, and may further include Sr. In the case where M² includes Ba, the content of Ba in M² may be, for example, 50% by mole or higher, 70% by mole or higher, or 90% by mole or higher. The content of Ba in M² may be, for example, 100% by mole or lower, or lower than 100% by mole.

M³ may include at least one selected from the group consisting of, for example, Be, Al, Si, Sc, Ti, V, Cr, Mn, Fe, Co, Ni, Cu, Zn, Ga, Ge, Zr, Nb, Mo, Ru, Rh, Pd, Ag, Sn, Hf, Ta, W, Re, Os, Ir, Pt, and Au. M³ may include at least one selected from the group consisting of Al, Si, Fe, Co, Cu, and Zn, and may include at least Co.

M³ may include at least one selected from the group consisting of Al, Si, Fe, Co, Cu, and Zn, and may further include at least one selected from the group consisting of Be, Sc, Ti, V, Cr, Mn, Ni, Ga, Ge, Zr, Nb, Mo, Ru, Rh, Pd, Ag, Sn, Hf, Ta, W, Re, Os, Ir, Pt, and Au. In the case where M³ includes at least one selected from the group consisting of Al, Si, Fe, Co, Cu, and Zn, the total content of Al, Si, Fe, Co, Cu, and Zn in M³ may be, for example, 50% by mole or higher, 70% by mole or higher, or 90% by mole or higher. The total content of Al, Si, Fe, Co, Cu, and Zn in M³ may be, for example, 100% by mole or lower, or lower than 100% by mole.

M³ may include Co, may further include at least one selected from the group consisting of Be, Al, Si, Sc, Ti, V, Cr, Mn, Fe, Ni, Cu, Zn, Ga, Ge, Zr, Nb, Mo, Ru, Rh, Pd, Ag, Sn, Hf, Ta, W, Re, Os, Ir, Pt, and Au, and may further include at least one selected from the group consisting of Al, Si, Fe, Cu, and Zn. In the case where M³ includes Co, the content of Co in M³ may be, for example, 50% by mole or higher, 70% by mole or higher, or 90% by mole or higher. The content of Co in M³ may be, for example, 100% by mole or lower, or lower than 100% by mole.

X may include O and may further include at least one selected from the group consisting of N, F, S, and Cl. The content of O in X may be, for example, 50% by mole or higher, 70% by mole or higher, or 90% by mole or higher, and may be 100% by mole.

The composition of the metal composite oxide including the non-stoichiometric ratio of oxygen may be identified by determining the composition ratios of the metal elements and the valence of each of the transition metal elements included in the metal elements. Examples of the method of determining the composition ratios of the metal elements include, for example, an inductively coupled plasma atomic emission spectroscopy (ICP-AES). Examples of the method of determining the valence of a transition metal element include, for example, an oxidation reduction titration method using iodine. The composition ratios of the metal composite oxide including the non-stoichiometric ratio of oxygen can be identified by combining the above methods. The number of moles of each of N, F, S, and Cl included in the composition of the metal composite oxide may also be similarly calculated.

The oxidation reduction titration using iodine may be performed as below. The metal composite oxide is resolved in an acidic water solution and the resultant solution is mixed with a potassium iodide solution, and the transition metal ions such as nickel ions, cobalt ions, and manganese ions each having an oxidation number greater than bivalence in the metal composite oxide are thereby reduced to Ni²⁺, Co²⁺, Mn²⁺, and the like. At this time, I⁻ in the equal amount to the reduction amount is oxidized to produce I₂. The amount of I₂ produced as above may be identified by titration using a sodium thiosulfate standard solution (Na₂S₂O₃) with a starch solution as the indicator.

For example, it is assumed that Y that is the first metal atom, Ba that is the second metal atom, and Co that is the third metal atom are detected at Y:Ba:Co = 1:1:4 as the ratio of the number of moles, by the ICP atomic emission spectroscopy. In this case, the detected amounts of yttrium ions, barium ions, and cobalt ions are respectively at 1, 1, and 4 on a molar basis. It is assumed that the average valence of the cobalt ions is determined as 2.25 by the oxidation reduction titration. Assuming that the valence of the yttrium ion is 3, the valence of the barium ion is 2, and the valence of the cobalt ion is 2.25, the number of moles of the oxygen atom included in the composition of the metal composite oxide is calculated as (3×1+2×1+2.25×4)/2=7.

The fact that the metal composite oxide has the Swedenborgite-type crystal structure can be confirmed by measuring an X-ray diffraction (XRD) spectrum of the metal composite oxide. For example, it can be identified that the metal composite oxide has the Swedenborgite-type crystal structure in the case where a similarity relationship is established between an XRD spectrum of the metal composite oxide and an XRD spectrum of an inorganic crystal for which it is indicated in the inorganic crystal structure database (ICSD) that the inorganic crystal has composition corresponding to that of the metal composite oxide and that the inorganic crystal has the Swedenborgite-type crystal structure.

For example, in the case where the metal composite oxide has the theoretical composition of YBaCo₄O₇, when the XRD data of the metal composite oxide has the corresponding peaks for relatively high-intensity plural (for example, four) peaks of the XRD data of YBaCo₄O₇ in the ICSD, it can be identified that the metal composite oxide has the Swedenborgite-type crystal structure. For example, when 2θ of the XRD data of YBaCo₄O₇ is at the positions of, for example, 28.42°±1°, 31.06°±1°, 33.50°±1°, and 52.08°±1°, it can be identified that YBaCo₄O₇ has the Swedenborgite-type crystal structure.

For example, in the case where the metal composite oxide has the theoretical composition of YBaCo₄O₈, when the XRD data of the metal composite oxide has the corresponding peaks for relatively high-intensity plural (for example, four) peaks of the XRD data of YBaCo₄O₈ in the ICSD, it can be identified that the metal composite oxide has the Swedenborgite-type crystal structure. For example, when 20 of the XRD data of YBaCo₄O₈ is at the positions of, for example, 28.32°±1°, 31.04°±1°, 33.50°±1°, and 56.40°±1°, it can be identified that YBaCo₄O₇ has the Swedenborgite-type crystal structure.

For example, in the case where the metal composite oxide has the theoretical composition of CaBaFe₄O₈, when the XRD data of the metal composite oxide has the corresponding peaks for relatively high-intensity plural (for example, four) peaks of the XRD data of CaBaFe₄O₈ in the ICSD, it can be identified that the metal composite oxide has the Swedenborgite-type crystal structure. For example, when 20 of the XRD data of CaBaFe₄O₈ is at the positions of, for example, 30.06°±1°, 33.12°±1°, 35.16°±1°, and 58.92°±1°, it can be identified that CaBaFe₄O₈ has the Swedenborgite-type crystal structure.

The shape of the metal composite oxide may be selected as necessary from, for example, a particle shape and a bulk shape. The volume average particle diameter of the metal composite oxide may be, for example, 1 nm or larger and 100 µm or smaller. The volume average particle diameter of the metal composite oxide may be 20 nm or larger, or 10 µm or smaller. The volume average particle diameter of the metal composite oxide is acquired as the particle diameter that corresponds to 50% of the cumulative volume from the small diameter side in the cumulative particle size distribution on a volume basis. The cumulative particle size distribution on a volume basis is measured using, for example, a laser diffraction particle size distribution measuring apparatus.

The metal composite oxide included in the electrode active material may be that of one type alone or may be those of two or more types in combination. The electrode active material may be a positive electrode active material or may be a negative electrode active material, depending on the active material included in the opposite electrode. The metal composite oxide may be used as a positive electrode active material by including, in the opposite electrode, an active material having a potential that is lower than that of the metal composite oxide when a fluoride ion battery is assembled. On the other hand, the metal composite oxide may be used as a negative electrode active material by including, in the opposite electrode, an active material having a potential that is higher than that of the metal composite oxide.

In the case where the electrode active material is used as a positive electrode active material, any active material may be selected that has a potential lower than that of the positive electrode active material, as the negative electrode active material. Examples of the negative electrode active material may include, for example, an elemental metal, an alloy, a metallic oxide, and a fluoride of each of these. Examples of the metal atom included in the negative electrode active material may include, for example, La, Ca, Al, Eu, Li, Si, Ge, Sn, In, V, Cd, Cr, Fe, Zn, Ga, Ti, Nb, Mn, Yb, Zr, Sm, Ce, Mg, and Pb. It is preferred that, among these, the negative electrode active material may include at least one selected from the group consisting of Mg, MgFₓ, Al, AlFₓ, Sn, SnFₓ, Ce, CeFₓ, Ca, CaFₓ, Pb, PbFₓ, La, and LaFₓ. "x" is a real number that is greater than 0. Examples of the negative electrode active material may also include a carbon material and a fluoride thereof. Examples of the carbon material may include, for example, black lead, coke, and a carbon nanotube. Yet other examples of the negative electrode active material can also include a polymer material. Examples of the polymer material may include, for example, polyaniline, polypyrrole, polyacetylene, and polythiophene.

In the case where the electrode active material is used as a negative electrode active material, any active material may be selected that has a potential higher than that of the negative electrode active material, as the positive electrode active material. Examples of the positive electrode active material may include, for example, an elemental metal, an alloy, a metallic oxide, and a fluoride of each of these. Examples of the metal atom included in the positive electrode active material may include, for example, Cu, Ag, Ni, Co, Pb, Ce, Mn, Au, Pt, Rh, V, Os, Ru, Fe, Cr, Bi, Nb, Sb, Ti, Sn, and Zn. It is preferred that, among these, the positive electrode active material may include at least one selected from the group consisting of Cu, CuF_{y}, Fe, FeF_{y}, Bi, and BiF_{y}. "y" is a real number that is greater than 0. The above carbon materials and the polymer materials may also be each used as the positive electrode active material.

The content raito of the metal composite oxide included in the electrode active material may be, for example, 50% by mass or higher, 70% by mass or higher, or 90% by mass or higher, relative to the electrode active material. The content ratio of the metal composite oxide may be, for example, 100% by mass or lower.

A production method for a ceramic material may be used as the production method for the metal composite oxide. For example, a liquid phase method such as a polymerized complex method, a hydrothermal synthesis method, or a coprecipitation method, or a solid phase method such as a sintering method, or a mechanochemical method may be used. Among these, with the liquid phase method, a highly chemically homogeneous metal composite oxide may be acquired.

The metal composite oxide may also be synthesized using, for example, the polymerized complex method. With this method, the chemical homogeneity of the acquired metal composite oxide may be enhanced compared to that of the solid phase method. With this method, metal sources each including a metal that is included in the metal composite oxide are first each weighed to establish the stoichiometric ratios equal to those of the metals included in the aimed metal composite oxide, to acquire a metal source mixture. The metal source mixture, pure water, and citric acid are next mixed with each other and ethylene glycol is further mixed with the mixture as necessary to acquire a raw material solution. The raw material solution is heated to be concentrated to acquire a powder-like precursor. After the precursor is crushed as necessary, heat treatment is applied to the precursor and a desired metal composite oxide can thereby be acquired. For the details of the polymerized complex method, for example, WO2019/065285 may be referred to.

The metal source to be used in the production of the metal composite oxide may be selected as necessary from, for example, a nitrate salt, an acetate salt, and an oxide each including the desired metal, to be used.

### Electrode Composition for Fluoride Ion Battery

An electrode composition for a fluoride ion battery (hereinafter, also referred to simply as "electrode composition") includes the metal composite oxide that contains a specific first metal atom, a specific second metal atom, a specific third metal atom, and a specific non-metal atom, and that has a layered structure. The metal composite oxide may be included in the electrode composition, as an electrode active material. The details of the metal composite oxide are as above. The content ratio of the metal composite oxide in the electrode composition may be, for example, 30% by mass or higher and 99% by mass or lower, and may be 50% by mass or higher, or 80% by mass or lower, relative to the electrode composition. The electrode composition may include one type of the metal composite oxide alone or may include two or more types thereof in combination.

The electrode composition may further include at least one other component selected from the group consisting of a conductive agent, a binding agent, a solid electrolyte, a dispersant, and the like, in addition to the metal composite oxide.

The conductive agent may be the one having a desired electronic conductive property, and examples thereof may include, for example, a carbon material. Examples of the carbon material may include, for example, carbon black such as fibrous carbon, acetylene black, Ketjen black, furnace black, thermal black or the like, graphene, fullerene, and a carbon nanotube. Examples of the binding agent may include, for example, polyvinylidene fluoride (PVDF), polytetrafluoroethylene (PTFE), carboxymethyl cellulose (CMC), and styrene-butadiene rubber (SBR).

Examples of the solid electrolyte may include a fluoride of a lanthanoid such as La or Ce, a fluoride of an alkali metal such as Li, Na, K, Rb, or Cs, and a fluoride of an alkali earth metal such as Ca, Sr, or Ba. For example, the examples can include a fluoride of La and Ba (such as, for example, La_{0.9}Ba_{0.1}F_{2.9}), and a fluoride of Pb and Sn (such as, for example, PbSnF₄).

In the case where the electrode composition includes the other components in addition to the metal composite oxide, the content ratio of the other components in the electrode composition may be, for example, 1% by mass or higher and 80% by mass or lower, and may be 20% by mass or higher, or 50% by mass or lower, relative to the electrode composition.

The electrode composition may be used in forming an electrode active material layer that is included in an electrode. The electrode composition may be a positive electrode composition included in a positive electrode active material layer, or may be a negative electrode composition included in a negative electrode active material layer, depending on the active material included in the opposite electrode thereof.

### Electrode for Fluoride Ion Battery

An electrode for a fluoride ion battery (hereinafter, also referred to simply as "electrode") includes the electrode composition for a fluoride ion battery. The electrode may include a current collector and an electrode active material layer disposed on the current collector. Examples of the material of the current collector may include, for example, gold, platinum, SUS, aluminum, nickel, iron, titanium, and carbon. The material of the current collector may be selected as necessary depending on the potential of the electrode. Examples of the shape of the current collector may include, for example, a foil shape, a mesh shape, and a porous shape.

The electrode active material layer disposed on the current collector may include the above electrode composition. The content ratio of the metal composite oxide in the electrode active material layer may be, for example, 20% by mass or higher, 50% by mass or higher, 70% by mass or higher, or 90% by mass or higher, relative to the electrode active material layer. The content ratio of the metal composite oxide in the electrode active material layer may be, for example, 99% by mass or lower.

The electrode active material layer may further include at least one selected from the group consisting of a conducting auxiliary agent, a binding agent, a solid electrolyte, a dispersant, and the like, in addition to the metal composite oxide. The content ratio of the conducting auxiliary agent in the electrode active material layer may be, for example, 1% by mass or higher and 20% by mass or lower, and may be 5% by mass or higher, or 10% by mass or lower, relative to the electrode active material layer. The content ratio of the binding agent in the electrode active material layer may be, for example, 1% by mass or higher and 30% by mass or lower, relative to the electrode active material layer.

The electrode for a fluoride ion battery may be a positive electrode for a fluoride ion battery, that has therein a positive electrode active material layer, or may be a negative electrode for a fluoride ion battery, that has therein a negative electrode active material layer, depending on the active material included the active material layer of the opposite electrode.

The electrode may be produced by pressuring the powder-like electrode composition to form the electrode active material layer, and connecting the electrode active material layer and the current collector. The electrode may also be produced by disposing the electrode composition that includes a solvent, on the current collector, and drying as necessary and pressure-forming these to thereby form the electrode active material layer on the current collector. The solvent may include an organic solvent such as N-methyl-2-pyrolidone (NMP), and an aqueous solvent such as a water solution.

### Fluoride Ion Battery

A fluoride ion battery includes the electrode for a fluoride ion battery, an electrolyte, and an opposite electrode. The electrode for a fluoride ion battery may be constituted as a positive electrode with the opposite electrode used as a negative electrode, or may be constituted as a negative electrode with the opposite electrode used as a positive electrode. The fluoride ion battery may include a separator between the positive electrode and the negative electrode. The fluoride ion battery may be a primary battery, may be a secondary battery, and may be preferably a secondary battery. The use of a primary battery also includes the use of a secondary battery as a primary battery (the use aiming at discharging only once after charging the secondary battery). Examples of the shape of the fluoride ion battery may include, for example, a coin shape, a laminate shape, a cylinder shape, and a quadrangle shape.

The detailed description for the electrode for a fluoride ion battery included in the fluoride ion battery is as above. The electrolyte is disposed between the electrode for a fluoride ion battery and the opposite electrode thereto. The electrolyte may be a liquid electrolyte (an electrolytic solution), or may be a solid electrolyte.

The electrolytic solution may be, for example, a non-aqueous electrolytic solution that includes a fluoride salt and an organic solvent. Examples of the fluoride salt may include an inorganic fluoride salt, an organic fluoride salt, an ionic liquid, and the like. Examples of the inorganic fluoride salt may include XF. "X" may include at least one alkali metal selected from the group consisting of Li, Na, K, Rb, and Cs. Examples of a cation of the organic fluoride salt may include an alkylammonium cation such as a tetramethylammonium cation. The concentration of the fluoride salt in the electrolytic solution may be, for example, 0.1% by mole or higher and 40% by mole or lower, and may be 1% by mole or higher, or 10% by mole or lower.

The organic solvent included in the electrolytic solution may be a solvent that resolves the fluoride salt. Examples of the organic solvent may include, for example, a glyme such as triethylene glycol dimethyl ether (G3) or tetraethylene glycol dimethyl ether (G4), a cyclic carbonate such as ethylene carbonate (EC), fluoroethylene carbonate (FEC), difluoroethylene carbonate (DFEC), propylene carbonate (PC), or butylene carbonate (BC), and a chain carbonate such as dimethyl carbonate (DMC), diethyl carbonate (DEC), or ethylmethyl carbonate (EMC). An ionic liquid may be used as the organic solvent.

Examples of the solid electrolyte may include a fluoride of a lanthanoid such as La or Ce, a fluoride of an alkali metal such as Li, Na, K, Rb, or Cs, and a fluoride of an alkali earth metal such as Ca, Sr, or Ba. Specifically, the examples may include a fluoride of La and Ba (such as, for example, La_{0.9}Ba_{0.1}F_{2.9}), and a fluoride of Pb and Sn (such as, for example, PbSnF₄).

The opposite electrode may include a current collector and an electrode active material layer disposed on the current collector. The material of the current collector may be selected as appropriate depending on the potential of the opposite electrode. For example, in the case where the opposite electrode is used as a negative electrode, examples of the material of the current collector can include, for example, gold, platinum, SUS, copper, nickel, and carbon. Examples of the shape of the current collector may include, for example, a foil shape, a mesh shape, and a porous shape.

In the case where the fluoride ion battery is assembled using the electrode for a fluoride ion battery as the positive electrode thereof, the negative electrode active material included in the negative electrode active material layer of the opposite electrode to be the negative electrode thereof may be an active material that has a potential lower than that of the metal composite oxide to be the positive electrode active material. The specific example of the negative electrode active material is as above. The content ratio of the negative electrode active material in the negative electrode active material layer may be, for example, 30% by mass or higher, and may be 50% by mass or higher, 70% by mass or higher, or 90% by mass or higher, relative to the negative electrode active material layer. The content ratio of the negative electrode active material in the negative electrode active material layer may be, for example, 99% by mass or lower.

In the case where the fluoride ion battery is assembled using the electrode for a fluoride ion battery as the negative electrode thereof, the positive electrode active material included in the positive electrode active material layer of the opposite electrode to be the positive electrode thereof may be an active material that has a potential higher than that of the metal composite oxide to be the negative electrode active material. The specific example of the positive electrode active material is as above. The content ratio of the positive electrode active material in the positive electrode active material layer may be, for example, 30% by mass or higher, and may be 50% by mass or higher, 70% by mass or higher, or 90% by mass or higher, relative to the positive electrode active material layer. The content ratio of the positive electrode active material in the positive electrode active material layer may be, for example, 99% by mass or lower.

The electrode active material layer of the opposite electrode may further include at least one selected from the group consisting of a conducting auxiliary agent, a binding agent, a solid electrolyte, a dispersant, and the like, in addition to the electrode active material. The content ratio of the conducting auxiliary agent in the electrode active material layer of the opposite electrode may be, for example, 1% by mass or higher and 20% by mass or lower, and may be 5% by mass or higher, or 10% by mass or lower, relative to the electrode active material layer. The content ratio of the binding agent in the electrode active material layer may be, for example, 1% by mass or higher and 30% by mass or lower, relative to the electrode active material layer.

### EXAMPLES

The present invention will be described below in detail with reference to Examples while the present invention is not limited to Examples.

### Example 1

### Synthesis of Metal Composite Oxide

Yttrium acetate (Y(NO₃)₃·9H₂O, produced by Kojundo Chemical Laboratory Co., Ltd.), barium nitrate (Ba(NO₃)₂, produced by FUJIFILM Wako Pure Chemical Corporation), and cobalt nitrate (Co(NO₃)₂·6H₂O, produced by Kojundo Chemical Laboratory Co., Ltd.) were weighed to be at Y(NO₃)₃·9H₂O : Ba(NO₃)₂ : Co(NO₃)₂·6H₂O = 1:1:4 as the molar ratios of the metals. Pure water, citric acid (produced by FUJIFILM Wako Pure Chemical Corporation) in a molar amount that is a five-fold amount of the total cation amount, and ethylene glycol (produced by FUJIFILM Wako Pure Chemical Corporation) in a molar amount that is equal to the total cation amount were added to the above weighed materials to be stirred such that the resultant mixture was homogeneous, to acquire a raw material solution. The raw material solution was left untouched in a constant temperature tank that was set to be at 150°C, to be heat-concentrated to thereby acquire a powder-like precursor. The acquired precursor was crushed and heat treatment was applied the crushed precursor at 1,000°C for 12 hours in the atmospheric air using a box furnace to acquire a metal composite oxide of Example 1.

### Example 2

The metal composite oxide acquired in Example 1 was subjected to heat treatment in the argon (Ar) atmosphere at 500°C for 15 hours to acquire a metal composite oxide of Example 2.

### Example 3

The metal composite oxide acquired in Example 1 was subjected to heat treatment in the atmospheric air at 330°C for 6 hours to acquire a metal composite oxide of Example 3.

### Metal Valence Analysis

Oxidation reduction titration was performed for the acquired metal composite oxides acquired in Examples 1 to 3, using iodine. The average valence of Co included in each metal composite oxide was shown in Table 1.

### Composition Analysis

The composition of each metal composite oxide acquired as above was determined by ICP. For example, after the metal composite oxide was alkali-fused as pretreatment, the metal composite oxide was hydrochloric acid-heat-dissolved and the compositional amounts of the metal ions were measured using ICP (Optima 8300, manufactured by Perkin Elmer, Inc.). The composition of the metal composite oxide including the non-stoichiometric ratio of oxygen was determined setting the number of moles of Y to be 1. The composition of acquired each metal composite oxide was shown in Table 2.

### Example 4

Calcium nitrate (Ca(NO₃)₂·4H₂O, produced by FUJIFILM Wako Pure Chemical Corporation), barium nitrate (Ba(NO₃)₂, produced by FUJIFILM Wako Pure Chemical Corporation), and iron nitrate (Fe(NO₃)₂·9H₂O, produced by FUJIFILM Wako Pure Chemical Corporation) were weighed to be at Ca(NO₃)₂·4H₂O : Ba(NO₃)₂ : Fe(NO₃)₂·9H₂O = 1:1:4 as the molar ratios of the metals. Pure water, citric acid (produced by FUJIFILM Wako Pure Chemical Corporation) in a molar amount that is a five-fold amount of the total cation amount, and ethylene glycol (produced by FUJIFILM Wako Pure Chemical Corporation) in a molar amount that is equal to the total cation amount were added to the above weighed materials to be stirred such that the resultant mixture was homogeneous, to acquire a raw material solution. The raw material solution was left untouched in a constant temperature tank that was set to be at 150°C, to be heat-concentrated to thereby acquire a powder-like precursor. The acquired precursor was crushed and heat treatment was applied the crushed precursor at 1,000°C for 12 hours in the atmospheric air using a box furnace to acquire a metal composite oxide of Example 4.

### X-Ray Diffraction (XRD) Measurement

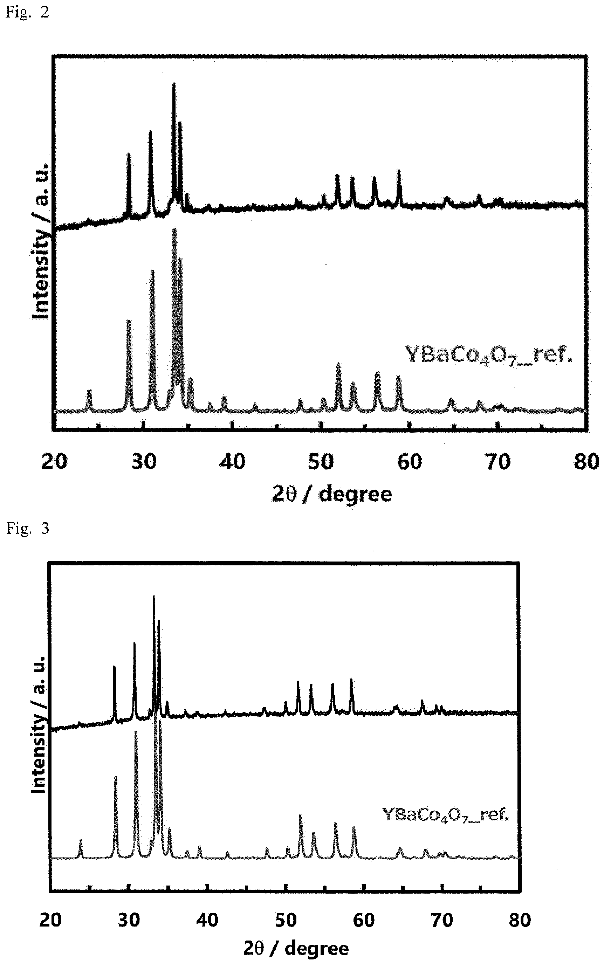

The metal composite oxides acquired in Examples 1 to 4 was packed in an XRD glass folder, and powder XRD measurement was performed therefor using an X-ray diffraction measuring apparatus (Miniflex 600, manufactured by Rigaku Corporation). For example, the measurement was performed at a scanning rate of 10°/min from 2θ=20° to 80° with the step width of 0.02°, using a CuKα line (λ=0.154 nm). Figs. 2 to 5 depict the results thereof.

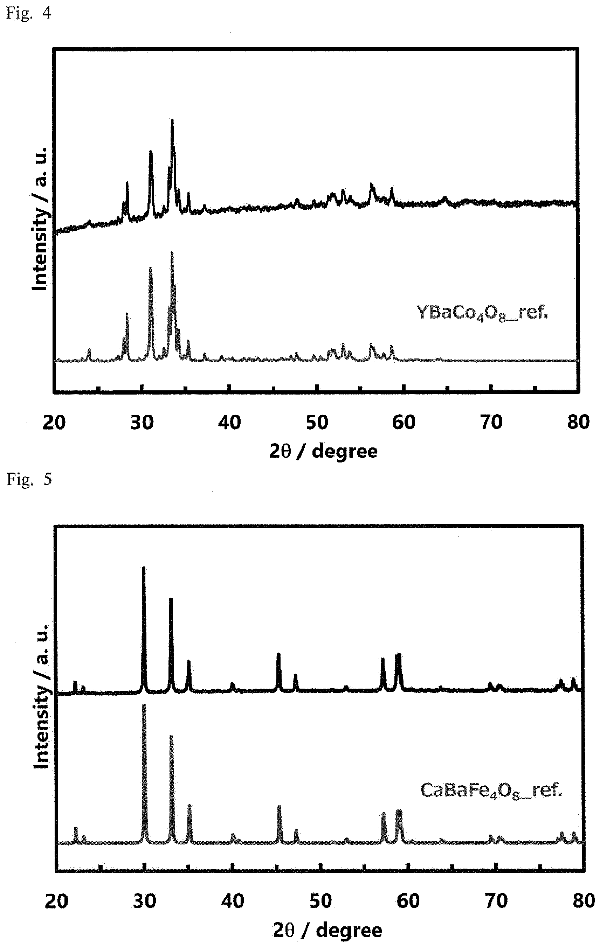

Fig. 2 depicts an XRD spectrum of the metal composite oxide of Example 1. The lower portion of Fig. 2 depicts an XRD spectrum of a Swedenborgite-type oxide that has composition represented by YBaCo₄O₇, as an authentic preparation. Fig. 3 depicts an XRD spectrum of the metal composite oxide of Example 2. The lower portion of Fig. 3 depicts an XRD spectrum of a Swedenborgite-type oxide that has composition represented by YBaCo₄O₇, as an authentic preparation. Fig. 4 depicts an XRD spectrum of the metal composite oxide of Example 3. The lower portion of Fig. 4 depicts an XRD spectrum of a Swedenborgite-type oxide that has composition represented by YBaCo₄O₈, as an authentic preparation. Fig. 5 depicts an XRD spectrum of the metal composite oxide of Example 4. The lower portion of Fig. 5 depicts an XRD spectrum of a Swedenborgite-type oxide that has composition represented by CaBaFe₄O₈, as an authentic preparation.

In the XRD spectrum of the metal composite oxide of Example 1, peaks were observed at the positions of 2θ=28.44°, 30.88°, 33.46°, and 51.96° as the four relatively-high intensity peaks.

In the XRD spectrum of the metal composite oxide of Example 2, peaks were observed at the positions of 2θ=28.30°, 30.88°, 33.34°, and 51.78° as the four relatively-high intensity peaks.

In the XRD spectrum of the metal composite oxide of Example 3, peaks were observed at the positions of 2θ=28.42°±1, 31.12°±1, 33.54°±1, and 56.42°±1 as the four relatively-high intensity peaks.

In the XRD spectrum of the metal composite oxide of Example 4, peaks were observed at the positions of 2θ=30.06°±1°, 33.12°±1°, 35.16°±1°, and 58.88°±1° as the four relatively-high intensity peaks.

In the XRD spectrum of the metal composite oxide of Example 1, it turned out that the metal composite oxide acquired in Example 1 had the Swedenborgite-type crystal structure, based on the fact that peaks were observed that corresponded to four peaks at 2θ=28.42°±1°, 31.06°±1°, 33.50°±1°, and 52.08°±1° in the XRD data of ICSD.

In the XRD spectrum of the metal composite oxide of Example 2, it turned out that the metal composite oxide acquired in Example 2 had the Swedenborgite-type crystal structure, based on the fact that peaks were observed that corresponded to four peaks at 2θ=28.42°±1°, 31.06°±1°, 33.50°±1°, and 52.08°±1° in the XRD data of ICSD.

In the XRD spectrum of the metal composite oxide of Example 3, it turned out that the metal composite oxide acquired in Example 3 had the Swedenborgite-type crystal structure, based on the fact that peaks were observed that corresponded to four peaks at 2θ=28.32°±1°, 31.04°±1°, 33.50°±1°, and 56.40°±1° in the XRD data of ICSD.

In the XRD spectrum of the metal composite oxide of Example 4, it turned out that the metal composite oxide acquired in Example 4 had the Swedenborgite-type crystal structure, based on the fact that peaks were observed that corresponded to four peaks at 2θ=30.06°±1°, 33.12°±1°, 35.16°±1°, and 58.92°±1° in the XRD data of ICSD. Evaluation

A battery for evaluation was assembled as below using the metal composite oxide acquired as above, and a charge-discharge test was performed therefor.

### Preparation of Solid Electrolyte

A fluoride having composition represented by La_{0.9}Ba_{0.1}F_{2.9} was prepared as the solid electrolyte.

### Preparation of Positive Electrode Composition

150 mg of the metal composite oxide acquired as above as the electrode active material, 300 mg of the solid electrolyte acquired as above, and 50 mg of VGCF^{(R)}-H (produced by Showa Denko K. K.) as the conducting auxiliary agent were prepared and were mixed with each other for 15 minutes in a mortar. 15 g of zirconia (ZrO₂) balls (Φ 3 mm) was added to the resultant mixture as a medium for mixing, to be mixed with each other using a homogenizer to acquire a positive electrode composition. All of the above steps were performed in a glove box filled with an argon atmosphere. Four types of positive electrode compositions are prepared of which the positive electrode composition includes the metal composition oxide as electrode active material acquired in Example 1; the positive electrode composition includes the metal composition oxide as electrode active material acquired in Example 2; positive electrode composition includes the metal composition oxide as electrode active material acquired in Example 3; and positive electrode composition includes the metal composition oxide as electrode active material acquired in Example 4.

### Preparation of Negative Electrode Composition

150 mg of tin fluoride (SnF₂, produced by Sigma-Aldrich Co., LLC) as a negative electrode active material, 300 mg of the solid electrolyte acquired as above, and 50 mg of VGCF^{(R)}-H as the conducting auxiliary agent were prepared and were mixed with each other for 15 minutes in a mortar. 15 g of zirconia balls (Φ 3 mm) was added to the resultant mixture as a medium for mixing, to be mixed with each other using a homogenizer to acquire a negative electrode composition. All of the above steps were performed in a glove box filled with an argon atmosphere.

### Assembly of Battery for Evaluation

10 mg of the positive electrode composition acquired as above, 175 mg of the solid electrolyte, and 50 mg of the negative electrode composition were stacked on each other in this order to be powder-compacting casted. An Au foil was attached as a current collector on each of both ends of the above to assemble a battery for evaluation. All of the above steps were performed in a glove box filled with an argon atmosphere.

### Charge-Discharge Test

A constant-current charge-discharge test was performed for the battery for evaluation acquired as above for 10 cycles at a current density of 6.7 mA/g in an environment at 140°C. The charge and the discharge cut-off voltages of the battery for evaluation including the positive electrode composition including the metal composite oxide acquired in Example 1 were 2.2 V and -1.5 V (vs. Sn/SnF₂).

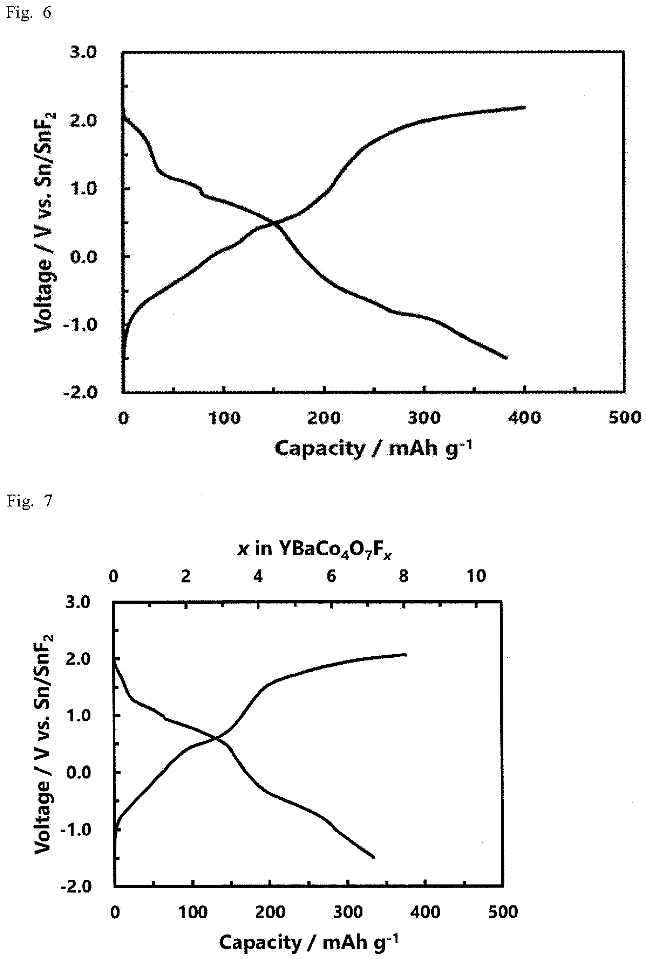

Fig. 6 depicts the charge and the discharge curves of the 10th cycle of the battery for evaluation including the positive electrode composition including the metal composite oxide acquired in Example 1. It is considered that the Swedenborgite-type composite oxide is usable as an electrode active material for a fluoride ion battery, based on the fact that a reversible charge-discharge behavior was confirmed for 10 cycles.

Fig. 7 depicts the charge and the discharge curves of the 4th cycle of the battery for evaluation including the metal composite oxide acquired in Example 2. The charge and the discharge cut-off voltages were 2.06 V and -1.5 V (vs. Sn/SnF₂). The reversible charge-discharge behavior was confirmed also for the metal composite oxide acquired in Example 2.

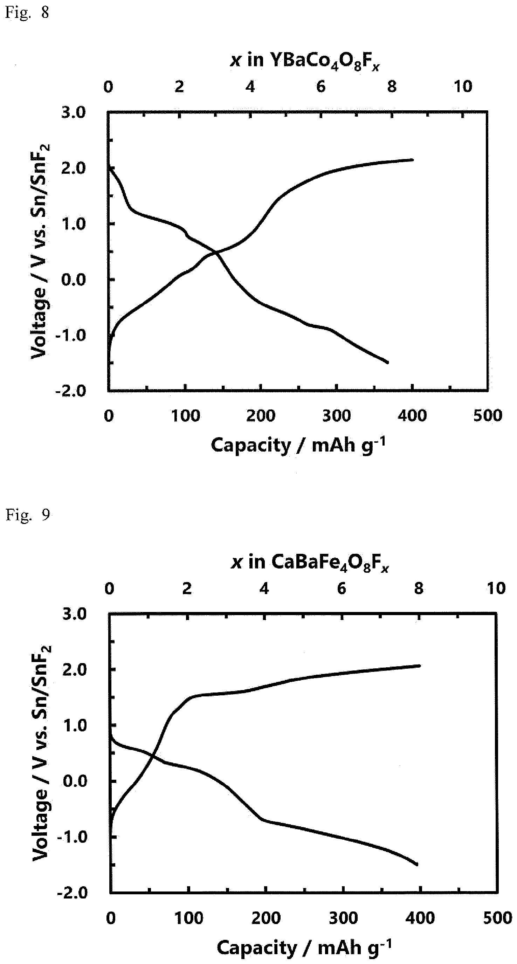

Fig. 8 depicts the charge and the discharge curves of the 8th cycle of the battery for evaluation including the metal composite oxide acquired in Example 3. The charge and the discharge cut-off voltages were 2.14 V and -1.5 V (vs. Sn/SnF₂). The reversible charge-discharge behavior was confirmed also for the metal composite oxide acquired in Example 3.

Fig. 9 depicts the charge and the discharge curves of the 3th cycle of the battery for evaluation including the metal composite oxide acquired in Example 4. The charge and the discharge cut-off voltages were 2.06 V and -1.5 V (vs. Sn/SnF₂). The reversible charge-discharge behavior was confirmed also for the metal composite oxide acquired in Example 4.

It is to be understood that although the present invention has been described with regard to preferred embodiments thereof, various other embodiments and variants may occur to those skilled in the art, which are within the scope and spirit of the invention, and such other embodiments and variants are intended to be covered by the following claims.

Although the present disclosure has been described with reference to several exemplary embodiments, it is to be understood that the words that have been used are words of description and illustration, rather than words of limitation. Changes may be made within the purview of the appended claims, as presently stated and as amended, without departing from the scope and spirit of the disclosure in its aspects. Although the disclosure has been described with reference to particular examples, means, and embodiments, the disclosure may be not intended to be limited to the particulars disclosed; rather the disclosure extends to all functionally equivalent structures, methods, and uses such as are within the scope of the appended claims.

One or more examples or embodiments of the disclosure may be referred to herein, individually and/or collectively, by the term "disclosure" merely for convenience and without intending to voluntarily limit the scope of this application to any particular disclosure or inventive concept. Moreover, although specific examples and embodiments have been illustrated and described herein, it should be appreciated that any subsequent arrangement designed to achieve the same or similar purpose may be substituted for the specific examples or embodiments shown. This disclosure may be intended to cover any and all subsequent adaptations or variations of various examples and embodiments. Combinations of the above examples and embodiments, and other examples and embodiments not specifically described herein, will be apparent to those of skill in the art upon reviewing the description.

In addition, in the foregoing Detailed Description, various features may be grouped together or described in a single embodiment for the purpose of streamlining the disclosure. This disclosure may be not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The above disclosed subject matter shall be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure may be determined by the broadest permissible interpretation of the following claims and their equivalents, and shall not be restricted or limited by the foregoing detailed description.

All publications, patent applications, and technical standards mentioned in this specification are herein incorporated by reference to the same extent as if each individual publication, patent application, or technical standard was specifically and individually indicated to be incorporated by reference.

## Claims

1. An electrode active material for a fluoride ion battery, the electrode active material comprising
a metal composite oxide comprising:
a first metal atom comprising at least one selected from the group consisting of Y, La, Ce, Pr, Nd, Pm, Sm, Eu, Gd, Tb, Dy, Ho, Er, Tm, Yb, Lu, Ca, In, and Sb;
a second metal atom comprising at least one selected from the group consisting of Mg, Sr, Ba, and Na;
a third metal atom comprising at least one selected from the group consisting of Be, Al, Si, Sc, Ti, V, Cr, Mn, Fe, Co, Ni, Cu, Zn, Ga, Ge, Zr, Nb, Mo, Ru, Rh, Pd, Ag, Sn, Hf, Ta, W, Re, Os, Ir, Pt, and Au; and
at least one non-metal atom comprising at least an oxygen atom and optionally at least one selected from the group consisting of F, N, S, and Cl, and wherein
the metal composite oxide has a composition in which a ratio of a total number of moles of the second metal atom to a total number of moles of the first metal atom is 0.8 or greater and 1.2 or smaller, a ratio of a total number of moles of the third metal atom to the total number of moles of the first metal atom is 3.8 or greater and 4.2 or smaller, and a ratio of a total number of moles of the non-metal atom to the total number of moles of the first metal atom is 6.9 or greater and 8.5 or smaller.

2. The electrode active material for a fluoride ion battery according to claim 1, wherein
the metal composite oxide comprises at least one selected from the group consisting of Y, Eu, Tb, Dy, Ho, Er, Tm, Ca, and In, as the first metal atom.

3. The electrode active material for a fluoride ion battery according to claim 1 or 2, wherein
the metal composite oxide comprises at least one selected from the group consisting of Sr and Ba, as the second metal atom.

4. The electrode active material for a fluoride ion battery according to any one of claims 1 to 3, wherein
the metal composite oxide comprises at least one selected from the group consisting of Al, Si, Fe, Co, and Zn, as the third metal atom.

5. An electrode active material for a fluoride ion battery, the electrode active material comprising a metal composite oxide having a composition represented by Formula (1) as below,
M¹M²ₚM³_{q}Xᵣ (1),
wherein
p, q, and r satisfy 0.8 ≤ p < 1.2, 3.8 ≤ q < 4.2, and 6.9 ≤ r ≤ 8.5,
M¹ comprises at least one selected from the group consisting of Y, La, Ce, Pr, Nd, Pm, Sm, Eu, Gd, Tb, Dy, Ho, Er, Tm, Yb, Lu, Ca, In, and Sb,
M² comprises at least one selected from the group consisting of Mg, Sr, Ba, and Na,
M³ comprises at least one selected from the group consisting of Be, Al, Si, Sc, Ti, V, Cr, Mn, Fe, Co, Ni, Cu, Zn, Ga, Ge, Zr, Nb, Mo, Ru, Rh, Pd, Ag, Sn, Hf, Ta, W, Re, Os, Ir, Pt, and Au, and
X comprises O and optionally at least one selected from the group consisting of N, F, S, and Cl.

6. The electrode active material for a fluoride ion battery according to claim 5, wherein
the metal composite oxide comprises at least one selected from the group consisting of Y, Eu, Tb, Dy, Ho, Er, Tm, Ca, and In, as the M¹.

7. The electrode active material for a fluoride ion battery according to claim 5 or 6, wherein
the metal composite oxide comprises at least one selected from the group consisting of Sr and Ba, as the M².

8. The electrode active material for a fluoride ion battery according to any one of claims 5 to 7, wherein
the metal composite oxide comprises at least one selected from the group consisting of Al, Si, Fe, Co, Cu, and Zn, as the M³.

9. An electrode for a fluoride ion battery, the electrode comprising the electrode active material for the fluoride ion battery according to any one of claims 1 to 8.

10. A fluoride ion battery comprising:
the electrode for the fluoride ion battery according to claim 9; and
an electrolyte.
